# EUROPEAN PATENT SPECIFICATION

(11) **EP 2 939 305 B1**
(45) Date of publication and mention of the grant of the patent: **14.12.2016**
(21) Application number: 13818162.3
(22) Date of filing: 20.12.2013
(51) Int. Cl.: H01M 10/0525, H01M 10/0567, H01M 10/0568, H01M 10/0569

(54) **ELECTROLYTE SOLUTIONS FOR LITHIUM-ION BATTERY CELLS OPERATING OVER A WIDE TEMPERATURE RANGE**
ELEKTROLYTLÖSUNGEN FÜR LITHIUMIONENBATTERIEN EINSETZBAR ÜBER EINEN WEITEN TEMPERATURBEREICH
SOLUTION D'ÉLECTOLYTE POUR DES BATTERIES LITHIUM D'ION OPÉERABLE SUR UNE LARGE GAMME DE TEMPÉRATURE

(30) Priority: 28.12.2012 US 201261746826 P; 19.12.2013 US 201314134978
(43) Date of publication of application: 04.11.2015
(73) Proprietor: Johnson Controls Technology Company, Holland, MI 49423 (US)
(72) Inventor: HALLAC, Boutros, Franklin, Wisconsin 53132 (US); HURLEY, Patrick T., Mequon, Wisconsin 53092 (US); JIANG, Junwei, Whitefish, Wisconsin 53217 (US); ZHANG, Zhenli, Glendale, Wisconsin 53217 (US)
(74) Representative: Trinks, Ole
(86) International application number: PCT/US2013/076920
(87) International publication number: WO 2014/105699

(56) References cited:
- US-A1- 2010 266 905
- US-A1- 2012 007 560
- US-A1- 2012 219 866

## Description

### BACKGROUND

The present disclosure relates generally to the field of lithium-ion batteries and battery modules. More specifically, the present disclosure relates to battery cells that may be used in vehicular contexts, as well as other energy storage/expending applications.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A vehicle that uses one or more battery systems for providing all or a portion of the motive power for the vehicle can be referred to as an xEV, where the term "xEV" is defined herein to include all of the following vehicles, or any variations or combinations thereof, that use electric power for all or a portion of their vehicular motive force. As will be appreciated by those skilled in the art, hybrid electric vehicles (HEVs) combine an internal combustion engine propulsion system and a battery-powered electric propulsion system, such as 48 volt or 130 volt systems. The term HEV may include any variation of a hybrid electric vehicle. For example, full hybrid systems (FHEVs) may provide motive and other electrical power to the vehicle using one or more electric motors, using only an internal combustion engine, or using both. In contrast, mild hybrid systems (MHEVs) disable the internal combustion engine when the vehicle is idling and utilize a battery system to continue powering the air conditioning unit, radio, or other electronics, as well as to restart the engine when propulsion is desired. The mild hybrid system may also apply some level of power assist, during acceleration for example, to supplement the internal combustion engine. Mild hybrids are typically 96V to 130V and recover braking energy through a belt- or crank-integrated starter generator. Further, a micro-hybrid electric vehicle (mHEV) also uses a "Stop-Start" system similar to the mild hybrids, but the micro-hybrid systems of a mHEV may or may not supply power assist to the internal combustion engine and operates at a voltage below 60V. For the purposes of the present discussion, it should be noted that mHEVs typically do not technically use electric power provided directly to the crankshaft or transmission for any portion of the motive force of the vehicle, but a mHEV may still be considered as an xEV since it does use electric power to supplement a vehicle's power needs when the vehicle is idling with internal combustion engine disabled and recovers braking energy through an integrated starter generator. In addition, a plug-in electric vehicle (PEV) is any vehicle that can be charged from an external source of electricity, such as wall sockets, and the energy stored in the rechargeable battery packs drives or contributes to drive the wheels. PEVs are a subcategory of electric vehicles that include all-electric or battery electric vehicles (BEVs), plug-in hybrid electric vehicles (PHEVs), and electric vehicle conversions of hybrid electric vehicles and conventional internal combustion engine vehicles.

xEVs as described above may provide a number of advantages as compared to more traditional gas-powered vehicles using only internal combustion engines and traditional electrical systems, which are typically 12 volt systems powered by a lead acid battery. For example, xEVs may produce fewer undesirable emission products and may exhibit greater fuel efficiency as compared to traditional internal combustion vehicles and, in some cases, such xEVs may eliminate the use of gasoline entirely, as is the case of certain types of PHEVs.

As xEV technology continues to evolve, there is a need to provide improved power sources (e.g., battery systems or modules) for such vehicles. For example, it is desirable to increase the distance that such vehicles may travel without the need to recharge the batteries. Additionally, it may also be desirable to improve the performance of such batteries and to reduce the cost associated with the battery systems. In particular, it may be desirable for an xEV battery power source to enable operation of the xEV in a number of environments (e.g., high and low temperature environments, humid environments, arid environments, etc.).

### SUMMARY

The present disclosure relates generally to the field of lithium-ion batteries and battery modules. More specifically, the present disclosure relates to battery cells that may be used in vehicular contexts, as well as other energy storage/expending applications.

The electrolyte solution includes at least one ester solvent and a plurality of additives. In particular, the plurality of additives includes a cyclic carbonate-based additive, a sultone-based additive, and either a borate-based additive or an imide-based additive.

In one embodiment electrolyte solution includes at least one ester solvent, between 0.5 wt% and 2.0 wt% cyclic carbonate-based additive, between 0.5 wt% and 2.0 wt% sultone-based additive, and between 0.5 wt% and 2.0 wt% borate-based additive.

In another embodiment, an electrolyte solution includes at least one ester solvent, between 0.5 wt% and 2.0 wt% cyclic carbonate-based additive, between 0.5 wt% and 2.0 wt% sultone-based additive, and between 0.5 wt% and 2.0 wt% imide-based additive.

In another embodiment, an electrolyte solution includes methyl butyrate (MB), vinylene carbonate (VC), propane sultone (PS), and at least one of: lithium bis(oxalatoborate) (LiBOB) or lithium bistrifluoromethylsulfonylimide (LiTFSI).

### DRAWINGS

FIG. 1 is a perspective view of a vehicle (an xEV) having a battery system contributing all or a portion of the power for the vehicle, in accordance with an embodiment of the present approach;
FIG. 2 is a cutaway schematic view of the xEV embodiment of FIG. 1 in the form of a hybrid electric vehicle (HEV), in accordance with an embodiment of the present approach;
FIG. 3 is a perspective view of a cylindrical battery cell, in accordance with an embodiment of the present approach;
FIG. 4 is a perspective view of a prismatic battery cell, in accordance with an embodiment of the present approach;
FIG. 5 is a perspective view of a pouch battery cell, in accordance with an embodiment of the present approach;
FIG. 6 is a schematic of an embodiment of a stack of anode layers, non-conductive layers, and cathode layers;
FIGS. 7A-C are graphs illustrating impedance measurements for embodiments of battery cells in accordance with aspects of the present approach;
FIGS. 8A-C are graphs illustrating cell voltage versus discharge capacity for embodiments of battery cells operating at low temperature in accordance with aspects of the present approach;
FIG. 9 is a graph illustrating cycle life performance (*i.e*., cell capacity versus cycle number) at high temperature for embodiments of battery cells in accordance with aspects of the present approach; and
FIG. 10 is another graph illustrating cycle life performance (*i.e.,* discharge capacity versus cycle number) at high temperature for embodiments of battery cells in accordance with aspects of the present approach.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The battery systems described herein may be used to provide power to a number of different types of xEVs as well as other energy storage applications (*e.g*., electrical grid power storage systems). Such battery systems may include one or more battery modules, each battery module having a number of battery cells (*e.g.,* lithium ion cells) arranged to provide particular voltages and/or currents useful to power, for example, one or more components of an xEV. Accordingly, presently disclosed are a number of systems and methods for the manufacture of battery cells that enable a wide range of operating temperatures, such as temperatures of -20 °C and below (*e.g.*, -30 °C) and at temperatures of 45 °C and above (*e.g.,* 60 °C). In particular, battery cells in accordance with the present approach include one or more additives and one or more ester solvents that, in combination, enable good capacity retention at low temperatures (*e.g*., -30 °C) and good cycle life performance at higher temperatures *(e.g.,* 45 °C), while also maintaining a low impedance. As such, present embodiments address shortcomings of typical secondary lithium ion battery cells in terms of providing sufficient current at low temperatures (*e.g*., to start an xEV having a combustion engine component in cold environments) without sacrificing longevity of the battery cell as a result of high temperature stress (*e.g*., successive charging and discharging cycles in warmer environments). By specific example, in certain embodiments, the disclosed electrolyte solution may include an ester solvent, such as methyl butyrate, as well as a combination of additives, such as vinylene carbonate, propane sultone, and either lithium bis(oxalatoborate) or lithium bistrifluoromethylsulfonylimide.

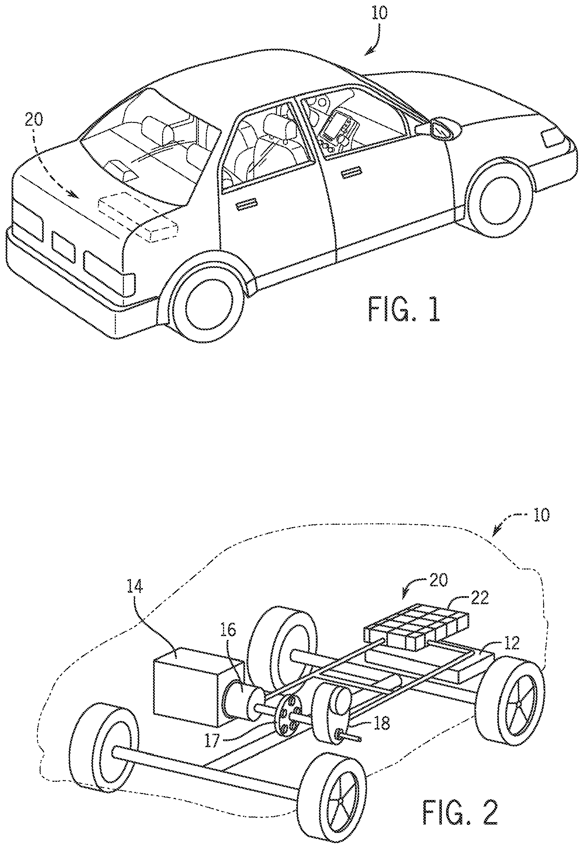

With the foregoing in mind, FIG. 1 is a perspective view of an xEV 10 in the form of an automobile (*e.g*., a car) having a battery system 20 in accordance with present embodiments for providing all or a portion of the power (*e.g*., electrical power and/or motive power) for the vehicle 10, as described above. Although the xEV 10 may be any of the types of xEVs described above, by specific example, the xEV 10 may be a mHEV, including an internal combustion engine equipped with a microhybrid system which includes a start-stop system that may utilize the battery system 20 to power at least one or more accessories (*e.g.*, AC, lights, consoles, etc.), as well as the ignition of the internal combustion engine, during start-stop cycles.

Further, although the xEV 10 is illustrated as a car in FIG. 1, the type of vehicle may differ in other embodiments, all of which are intended to fall within the scope of the present disclosure. For example, the xEV 10 may be representative of a vehicle including a truck, bus, industrial vehicle, motorcycle, recreational vehicle, boat, or any other type of vehicle that may benefit from the use of electric power. Additionally, while the battery system 20 is illustrated in FIG. 1 as being positioned in the trunk or rear of the vehicle, according to other embodiments, the location of the battery system 20 may differ. For example, the position of the battery system 20 may be selected based on the available space within a vehicle, the desired weight balance of the vehicle, the location of other components used with the battery system 20 (*e.g.,* battery management systems, vents or cooling devices, etc.), and a variety of other considerations.

FIG. 2 illustrates a cutaway schematic view of an embodiment of the xEV 10 of FIG. 1, provided in the form of an HEV having the battery system 20, which includes one or more battery modules 22. In particular, the battery system 20 illustrated in FIG. 2 is disposed toward the rear of the vehicle 10 proximate a fuel tank 12. In other embodiments, the battery system 20 may be provided immediately adjacent the fuel tank 12, provided in a separate compartment in the rear of the vehicle 10 *(e.g.,* a trunk), or provided in another suitable location in the xEV 10. Further, as illustrated in FIG. 2, an internal combustion engine 14 may be provided for times when the xEV 10 utilizes gasoline power to propel the vehicle 10. The vehicle 10 also includes an electric motor 16, a power split device 17, and a generator 18 as part of the drive system.

The xEV vehicle 10 illustrated in FIG. 2 may be powered or driven by the battery system 20 alone, by the combustion engine 14 alone, or by both the battery system 20 and the engine 14. It should be noted that, in other embodiments of the present approach, other types of vehicles and configurations for the vehicle drive system may be utilized, and that the schematic illustration of FIG. 2 should not be considered to limit the scope of the subject matter described in the present application. According to various embodiments, the size, shape, and location of the battery system 20, the type of vehicle, the type of xEV technology, and the battery chemistry, among other features, may differ from those shown or described. The battery system 20 may generally include one or more battery modules 22, each having a plurality of battery cells (*e.g.*, lithium ion cells), which are discussed in greater detail below. The battery system 20 may include features or components for connecting the multiple battery modules 22 to each other and/or to other components of the vehicle electrical system. For example, the battery system 20 may include features that are responsible for monitoring and controlling the electrical and thermal performance of the one or more battery modules 22.

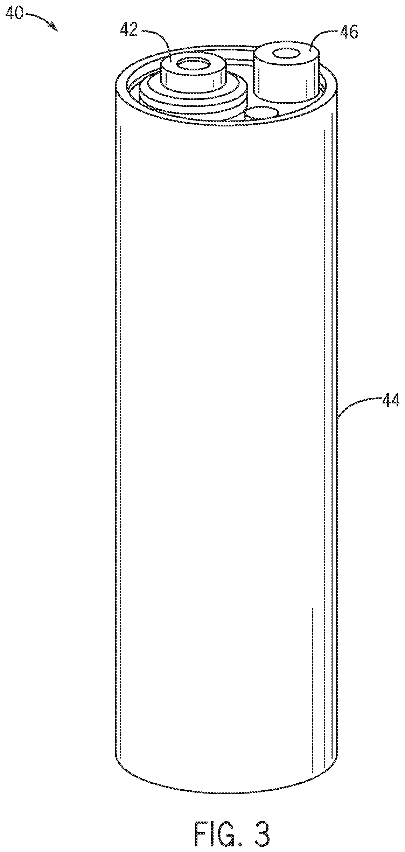

With the foregoing in mind, FIGS. 3-5 are perspective views of embodiments of battery cells that may include the presently disclosed electrolyte solution, which enables good performance over a wide range of operating temperatures. That is, in certain embodiments, the battery system 22 illustrated in FIGS. 1 and 2 may include a suitable number (*e.g.*, 2, 3, 4, 5, 6, 7, 8, 9, 10, or more) of the battery cells of FIGS. 3-5, each configured to store an electrical charge. It should be appreciated that the battery cells illustrated in FIGS. 3-5 are merely provided as examples. In other embodiments, other shapes (*e.g*., oval, prismatic, polygonal, etc.), sizes, terminal configuration, and other features may also be used for battery cells without spoiling the effect of the present approach.

FIG. 3 illustrates a cylindrical lithium ion battery cell 40 according to one example embodiment of the present approach. The illustrated cylindrical lithium ion battery cell 40 includes a negative terminal 42 that is coupled to an anode disposed within the housing 44 of the battery cell 40. The illustrated cylindrical lithium ion battery cell 40 also includes a positive terminal 46 coupled to the cathode that is also disposed within the housing 44 of the battery cell 40. For the illustrated cylindrical lithium ion battery cell 40, the anode and cathode may be in the form of a cylindrical coil discussed below. Further, as discussed in detail below, the cylindrical battery cell 40 includes an electrolyte having one or more additives and one or more ester solvents that together enable good performance and longevity throughout both high temperature *(e.g.,* 60 °C) and low temperature *(e.g.,* -30 °C) operation.

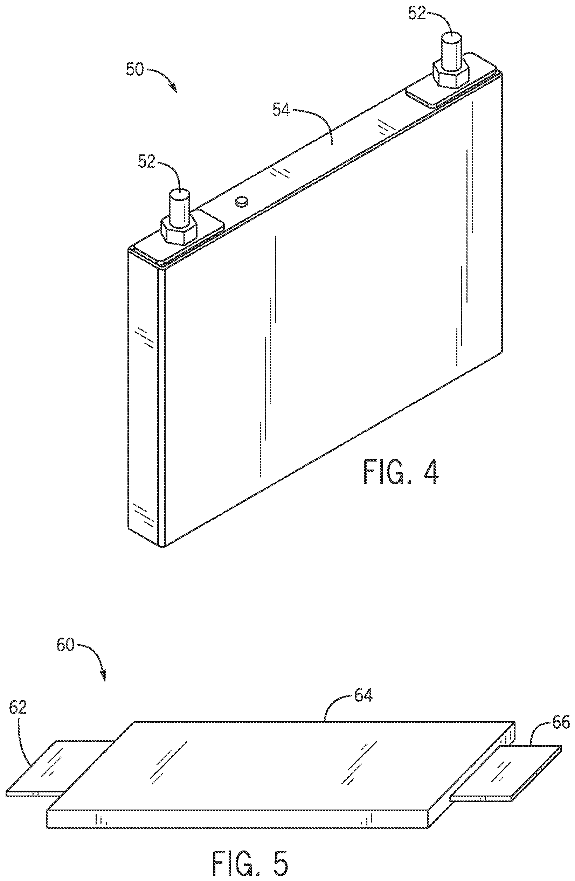

FIG. 4 illustrates a prismatic lithium ion battery cell 50 according to another example embodiment of the present approach. The illustrated prismatic lithium ion battery cell 50 includes a negative terminal 52 that is coupled to an anode disposed within the housing 54 of the battery cell 50. The illustrated prismatic lithium ion battery cell 40 also includes a positive terminal 56 coupled to the cathode that is also disposed within the housing 54 of the battery cell 50. For the illustrated prismatic lithium ion battery cell 50, the anode and cathode may be in the form of an oblong coil or as a series of stacked plates discussed below. Furthermore, as discussed in detail below, the prismatic battery cell 50 includes an electrolyte having one or more additives and one or more ester solvents that together enable good performance and longevity throughout both high temperature (*e.g*., 60 °C) and low temperature (*e.g.*, -30 °C) operation.

FIG. 5 illustrates a pouch lithium ion battery cell 60 according to another example embodiment of the present approach. The illustrated pouch lithium ion battery cell 60 includes a negative tab terminal 62 that is coupled to an anode disposed within the non-conductive polymer pouch 64 of the battery cell 60. The illustrated pouch lithium ion battery cell 60 also includes a positive tab terminal 66 coupled to the cathode that is also disposed within the polymer pouch 64 of the battery cell 60. For the illustrated pouch lithium ion battery cell 60, the anode and cathode may be in the form of an oblong coil discussed below. As with the cylindrical cell 40 and the prismatic cell 50 discussed above, the pouch battery cell 40 includes one or more additives and one or more ester solvents, discussed in detail below, that together enable good performance and longevity throughout both high temperature *(e.g.,* 60 °C) and low temperature *(e.g.,* -30 °C) operation.

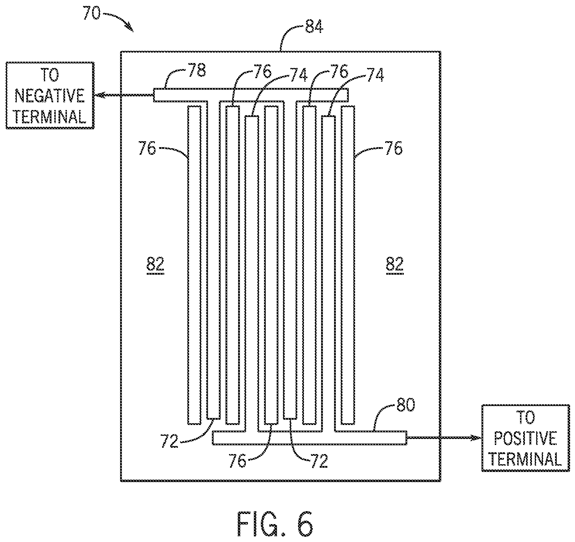

To better illustrate a general structure of the anodes and cathodes of each of the battery cell embodiments 40, 50, and 60 illustrated in FIGS. 3, 4, and 5, respectively, FIG. 6 is a schematic illustrating certain internal components of an embodiment of a secondary lithium ion battery cell 70, which may be any of the battery cell embodiments 40, 50, or 60. The embodiment of the battery cell 70 illustrated in FIG. 6 includes alternating anode layers 72 and cathode layers 74, as well as non-conductive layers 76 disposed between each anode and cathode layer and as outer layers. This alternating stack structure may be formed in a number of ways. For example, in certain embodiments, the alternating stack may be formed by stacking an anode layer 72 (*e.g.*, graphite or a similar type of carbon anode material), one or more non-conductive layers 76, and the cathode layer (*e.g.,* a strip of aluminum foil with an active material), and then winding the stack (*e.g*., about a mandrel) to form a cylindrical or oblong coil. In other embodiments, this alternating stack structure may be constructed by alternately stacking anode plates 72 (*e.g.,* copper plates coated with an active material) and cathode plates 74 (*e.g.,* aluminum plates coated with an active material) separated from one another by non-conductive layers or plates 76. Regardless of whether the stack structure is achieved via a coil or stacked plates, the anode layers 72 may be electrically coupled to one another and to the negative terminal (*e.g.*, negative terminals 42, 52, and 62 of battery cells 40, 50, and 60, respectively) via a negative current collector feature 78. Similarly, the cathode layers 74 may be electrically coupled to one another and to the positive terminal (*e.g*., positive terminals 42, 52, and 66 of battery cells 40, 50, and 60, respectively) via a positive current collector feature 80.

Additionally, the battery cell 70 illustrated in FIG. 6 includes an electrolyte solution 82 that is disposed within the packaging 84 and throughout the battery cell 70 to facilitate the shuttling of carriers *(e.g.,* electrons and holes) and/or ions (*e.g.,* lithium ions) within the battery cell 70 during operation. Further, the electrolyte solution 82 includes at least one additive and at least one ester solvent that enable the battery cell 70 to provide both low temperature performance and high temperature longevity. It may be appreciated that all combinations of the disclosed additives and solvents are presently contemplated (*e.g*., including embodiments having one additive and two ester solvents, two additives and one ester solvent, two additives and two ester solvents, and so forth). It may also be appreciated that the electrolyte solution 82 may also include other components, such as lithium salts (*e.g.,* LiPF₆, LiBF₄, or another suitable lithium salt) and other solvents (*e.g*., ethylene carbonate (EC), and/or ethyl methyl carbonate (EMC)) to facilitate operation of the battery cell 70. For example, a non-limiting list of carbonate solvents may include: ethylene carbonate (EC), ethyl methyl carbonate (EMC), dimethyl carbonate, methyl propyl carbonate, diethyl carbonate, propylene carbonate, dipropyl carbonate, butylene carbonate, dibutyl carbonate, pentene carbonate, or any other alkyl or alkenyl carbonate suitable for use in battery applications. By specific example, in certain embodiments, the electrolyte solution 82 of the battery cell 70 may include lithium hexafluorophosphate (LiPF₆) in a mixture of solvents that includes both EC and EMC in equal parts.

In particular, embodiment of the electrolyte solution 82 include one or more ester solvents, such as butyrates and propionates, that enable improved low temperature battery performance (*e.g.*, at temperatures less than -20 °C). A non-limiting list of example ester solvents include: methyl propionate (MP), methyl butyrate (MB), ethyl propionate (EP), and ethyl butyrate (EB). By specific example, in certain embodiments, the electrolyte solution 82 of the battery cell 70 may include a mixture of solvents that include a cyclic carbonate (*e.g*., EC), a straight-chain carbonate (*e.g.,* EMC), and one or more ester solvents (*e.g.,* MB). In particular, in certain embodiments, the electrolyte solution 82 may be synthesized by first forming a first solution that includes a lithium salt (*e.g.,* 1.2 M LiPF₆) dissolved in 20 vol% EC, 20 vol% EMC, and 60 vol% ester solvents (*e.g*., MB), and then combining this first solution with one or more additives, as discussed below. In certain embodiments, the solvent mixture may include approximately equal parts cyclic carbonate and straight-chain carbonate. In certain embodiments, the solvent mixture and/or the final electrolyte solution 82 may include approximately three times as much ester solvent as the cyclic carbonate or the straight-chain carbonate. Additionally, in certain embodiments, one or more ester solvents may account for greater than approximately 40 vol%, approximately 50 vol%, or approximately 60 vol% of the electrolyte solution 82.

Additionally, embodiments of the electrolyte solution 82 also include one or more additives that enable improved cycle and calendar life throughout higher temperature operation (*e.g.*, at temperatures of 45 °C or more). A non-limiting list of example classes of additives include: sultone-based additives, imide-based additives, borate-based additives, cyclic carbonate-based additives, fluorinated cyclic carbonate-based additives, fluorinated ester-based additives, sulfone-based additives, fluorinated borate-based additives, amide-based additives, linear carbonate-based additives, and fluorinated linear carbonate-based additives. A non-limiting list of example additives include: lithium bis(oxalatoborate) (LiBOB), vinylene carbonate (VC), propane sultone (PS), lithium bistrifluoromethylsulfonylimide (LiTFSI), lithium difluoroborate (LiDFOB) and fluoroethylene carbonate (FEC). It may be appreciated that each of these additives may affect the performance of the battery cell 70 in different ways. For example, certain carbonate-based additives, such as the cyclic carbonate-based additive VC, as well as certain borate-based additives, such as LiBOB, may stabilize the interface at the anode layers 72 of the battery cell 70 during operation, which improves the longevity of the battery cell 70 during high temperature operation. By further example, certain sultone-based additives, such as PS, may instead stabilize the cathode layers 74 during high-temperature operation of the battery cell 70 to improve the longevity of the battery cell 70.

These additives are included, alone or in combination, at a concentration between approximately 0.5 wt% and approximately 2.0 wt%. The electrolyte solution 82 includes between approximately 0.5 wt% and approximately 2.0 wt% PS. Additionally, the electrolyte solution 82 includes, in combination with the PS, between approximately 0.5 wt% and approximately 2.0 wt% VC. Furthermore, in combination with the PS and VC, the electrolyte solution 82 includes between approximately 0.5 wt% and approximately 2.0 wt% either LiBOB or LiTFSI. It may appreciated that if the concentration of the one or more additives is too great, the cell resistance of the battery module 70 may detrimentally increase; however, if the concentration of the one or more additives is too low, the high-temperature longevity of the battery module 70 may suffer.

In certain embodiments, the electrolyte solution 82 may be formed by first forming an initial solution of an electrolyte salt in a carbonate and ester solvent mixture (*e.g*., 1.2 M LiPF₆ in 20 vol% EC, 20 vol% EMC, and 60 vol% MB), to which a number of additives are added to yield the final electrolyte solution 82. These additives include a cyclic carbonate additive (*e.g.*, VC) and a fluorinated cyclic carbonate additive (*e.g.*, FEC) and a sultone additive (*e.g.,* PS), and either a borate additive (*e.g.,* LiBOB) or an imide-based additive (*e.g*., LiTFSI). By specific example, in certain embodiments, the additives include approximately 1 wt% VC, 1 wt% PS, and approximately 0.5 wt% LiBOB. In other embodiments, the additives include approximately 1 wt% VC, approximately 1 wt% PS, and approximately 0.3 wt% LiTFSI. Accordingly, each of these additives are added to the initial solution (*e.g*., 1.2 M LiPF₆ in 20 vol% EC, 20 vol% EMC, and 60 vol% MB) to form the final electrolyte solution 82. It may be appreciated that the weight percent values of the additives are determined relative to the weight of the initial solution to which the additives are added. It may further be appreciated that the presently discussed order of addition of the components of the electrolyte 82 is merely provided as an example and is by no means limiting. In other embodiments, the components of the electrolyte solution 82 may be added in any order without negating the effect of the present approach.

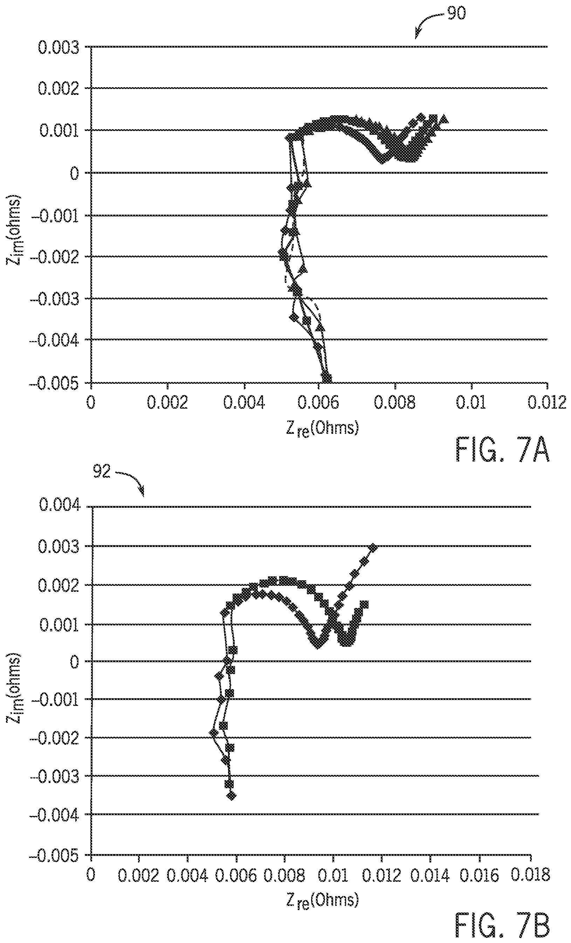

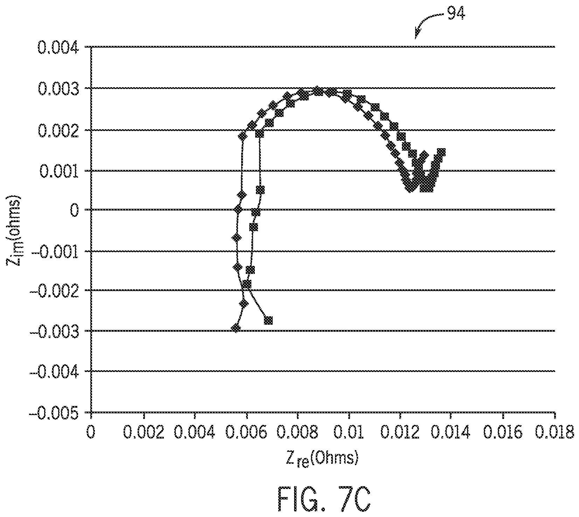

FIGS. 7A-C illustrate impedance measurements for a number of 3 amphours (Ah) battery cells 70 (*e.g.,* battery cells having an average 0.2C capacity of approximately 3.28 Ah), each including an electrolyte solution 82 having at least one ester solvent and at least one additive. Additionally, the impedance data illustrated in FIGS. 7A-C was collected at room temperature (*e.g*., between approximately 20 °C and 25 °C), and over a frequency range of 1 kilohertz (kHz) to 100 millihertz (mHz). For the embodiments illustrated in the graph 90 of FIG. 7A, the electrolyte solution 82 (not according to the invention) is formed by adding 2 wt% VC (additive) to a 1.2M solution of LiPF₆ dissolved in 20 vol% EC, 20 vol% EMC, and 60 vol% MB (ester solvent). For the embodiments illustrated in the graph 92 of FIG. 7B (not according to the invention), the electrolyte solution 82 is formed by adding 2 wt% VC (additive) and 2 wt% FEC (additive) to a 1.2M solution of LiPF₆ dissolved in 20 vol% EC, 20 vol% EMC, and 60 vol% MB (ester solvent). For the embodiments illustrated in the graph 94 of FIG. 7C, the electrolyte solution 82 is formed by adding 2 wt% VC (additive) and 1 wt% PS (additive) to a 1.2M solution of LiPF₆ dissolved in 20 vol% EC, 20 vol% EMC, and 60 vol% MB (ester solvent). Additionally, the impedance data illustrated in the graph 90 of FIG. 7A was collected using a cell state of charge (SoC) of approximately 30%, while the impedance data illustrated in the graphs 92 and 94 of FIGS. 7B and 7C was collected using a cell SoC of approximately 50%. Further, the graphs 90, 92, and 94 generally illustrate an impedance of approximately 6 milliohms (mΩ) at a frequency of approximately 1 kHz. Accordingly, Fig. 7A illustrates that embodiments of the battery cell 70 utilizing the disclosed electrolyte solution 82 provide a suitably low impedance at room temperature.

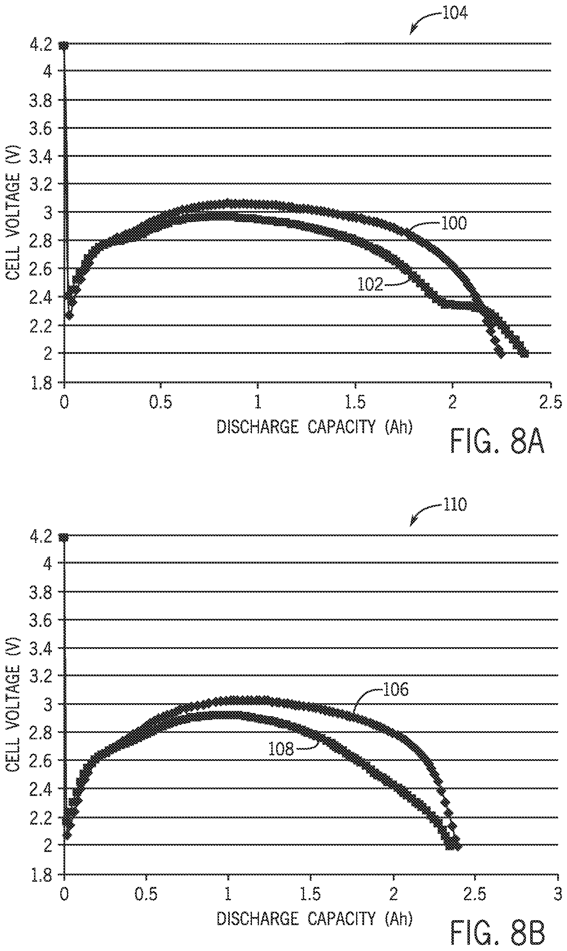

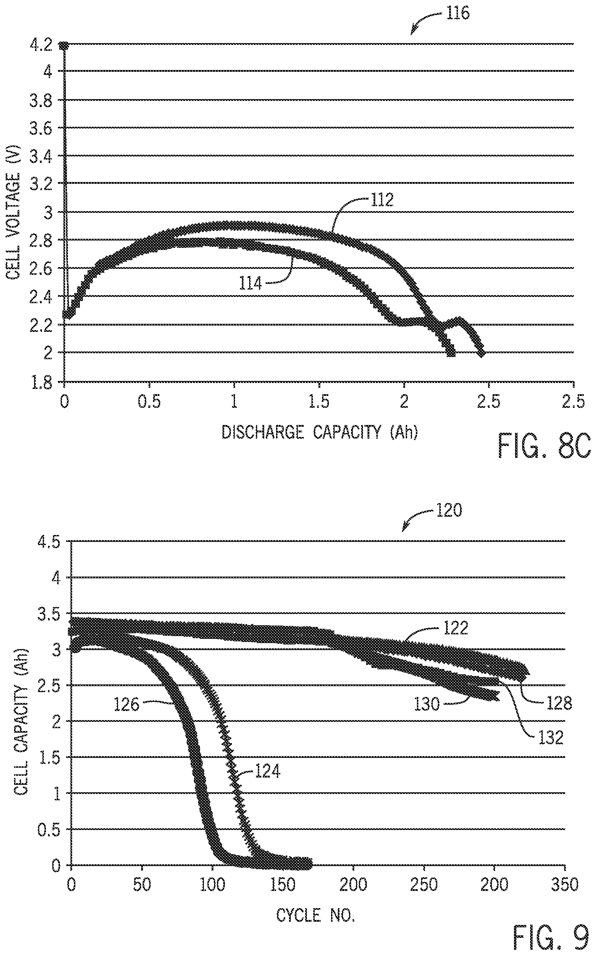

FIGS. 8A-C illustrate rate capability (*e.g*., cell voltage as a function of discharge capacity) for a number of 3 Ah battery cells 70 that each include an electrolyte solution 82 having at least one ester solvent and at least one additive. Additionally, the data illustrated in FIGS. 8A-C was collected at low temperature (*e.g.*, at approximately -30 °C), at a 5C discharge rate, and after approximately 5 hours soaking time. For the battery cell represented by the curves 100 and 102 illustrated in the graph 104 of FIG. 8A (not according to the invention), the electrolyte solution 82 is formed by adding 2 wt% VC (additive) to a 1.2M solution of LiPF₆ dissolved in 20 vol% EC, 20 vol% EMC, and 60 vol% MB (ester solvent). The curve 100 demonstrates a capacity retention of approximately 75% and an IR drop *(e.g.,* a drop in the product of current (I) and resistance (R)) of approximately 0.123 Ω for one embodiment of the battery cell 70, while the curve 102 demonstrates a capacity retention of approximately 79% and an IR drop of approximately 0.119 Ω for another embodiment of the battery cell 70. For the battery cell represented by the curves 106 and 108 illustrated in the graph 110 of FIG. 8B (not according to the invention), the electrolyte solution 82 is formed by adding 2 wt% VC (additive) and 2 wt% FEC (additive) to a 1.2M solution of LiPF₆ dissolved in 20 vol% EC, 20 vol% EMC, and 60 vol% MB (ester solvent). In particular, the curve 106 demonstrates a capacity retention of approximately 80% and an IR drop of approximately 0.138 Ω for one embodiment of the battery cell 70, while the curve 108 demonstrates a capacity retention of approximately 78% and an IR drop of approximately 0.132 Ω for another embodiment of the battery cell 70. For the embodiments represented by the curves 112 and 114 illustrated in the graph 116 of FIG. 8C, the electrolyte solution 82 is formed by adding 1 wt% VC (additive), 1 wt% PS (additive), and 0.5 wt% LiBOB to a 1.2M solution of LiPF₆ dissolved in 20 vol% EC, 20 vol% EMC, and 60 vol% MB (ester solvent). In particular, the curve 112 demonstrates a capacity retention of approximately 82% and an IR drop of approximately 0.125 Ω for one embodiment of the battery cell 70, while the curve 114 demonstrates a capacity retention of approximately 77% and an IR drop of approximately 0.125 Ω for another embodiment of the battery cell 70. As such, the the battery cell 70 represented in the graph 116 of FIG. 8C demonstrate good capacity retention, even when operating at low temperatures.

FIG. 9 is a graph 120 illustrating cycle life performance (*i.e.*, cell capacity versus cycle number) for a number of different battery cells operating at high temperatures (*e.g*., 60 °C). The curves of the graph 120 include a curve 122 that is representative of an embodiment of a battery cell 70 including the electrolyte solution 82 having at least one ester solvent and at least one additive. In particular, the electrolyte solution 82 of the battery cell 70 represented by the curve 122 is formed by adding 1 wt% VC (additive), 1 wt% PS (additive), and 0.5 wt% LiBOB (additive) to a 1.2M solution of LiPF₆ dissolved in 20 vol% EC, 20 vol% EMC, and 60 vol% MB (ester solvent). The graph 120 includes curves 124 and 126 that are not according to the invention of battery cells 70 having a different electrolyte (*i.e.,* a 1.2M solution of LiPF₆ dissolved in 20 vol% EC, 20 vol% EMC, and 60 vol% MB with no additives present). Additionally, the graph 120 also include curves 128, 130, and 132 that are not according to the invention of battery cells 70 having yet another electrolyte (*i.e.,* made by adding 1 wt% VC, 1 wt% PS, and 0.5 wt% LiBOB to a 1.2M solution of LiPF₆ dissolved in 50 vol% EC, 50 vol% EMC with no ester solvent present). Accordingly, the curve 122 illustrates that embodiments of the battery cell 70 utilizing the electrolyte solution 82 that have at least one ester solvent and at least one additive enable superior cycle life performance at higher temperatures (*e.g*., 60 °C).

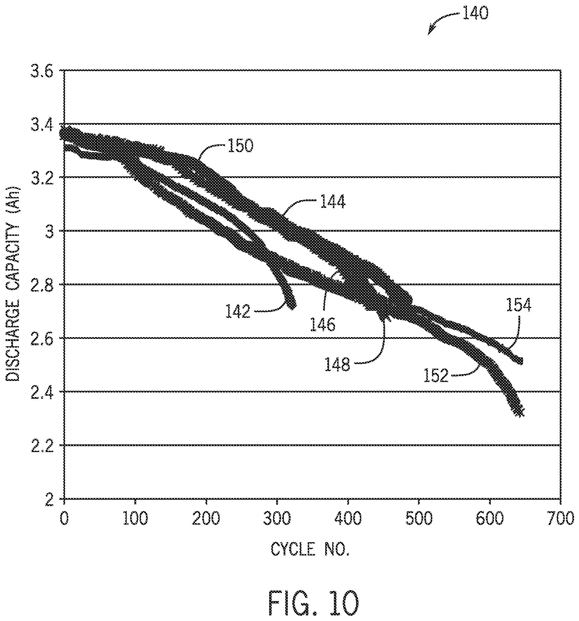

FIG. 10 is another graph 140 illustrating cycle life performance (*i.e.*, discharge capacity versus cycle number) for embodiments of 3 Ah battery cells 70 operating at high-temperature (*e.g.*, 60 °C). Each curve of the graph 140 represents an embodiment of the battery cell 70 having an embodiment of the electrolyte solution 82, wherein the electrolyte solution 82 includes at least one ester solvent and at least one additive. In particular, the electrolyte solution 82 of the battery cells 70 represented by the curves 142, 144, 146, 148, and 150 may be formed by adding 1 wt% VC (additive), 1 wt% PS (additive), and 0.5 wt% LiBOB (additive) to a 1.2M solution of LiPF₆ dissolved in 20 vol% EC, 20 vol% EMC, and 60 vol% MB (ester solvent). Further, the electrolyte solution 82 of the battery cells 70 represented by the curves 152 and 154 may be formed by adding 1 wt% VC (additive), 1 wt% PS (additive), and 0.3 wt% LiTFSI (additive) to a 1.2M solution of LiPF₆ dissolved in 20 vol% EC, 20 vol% EMC, and 60 vol% MB (ester solvent). Accordingly, the graph 140 illustrates good cycle life performance for the represented embodiments of the battery cell 70 utilizing the presently disclosed electrolyte solution 82, even when operating at high temperatures (*e.g.*, 60 °C) over hundreds of cycles.

One or more of the disclosed embodiments, alone or on combination, may provide one or more technical effects useful in the remanufacture of battery modules, and portions of battery modules. For example, certain embodiments of the present approach may enable the manufacture of lithium ion battery cells that having a wide range of operating temperatures, such as temperatures of -20 °C and below and at temperatures of 60 °C and above. In particular, embodiments of battery cells of the present approach include an electrolyte solution having one or more additives and one or more ester solvents. The disclosed embodiments of the electrolyte solution enable good capacity retention at low temperatures (*e.g.*, -30 °C), good cycle life performance at higher temperatures (*e.g.*, 60 °C), and also maintain a low impedance. As such, present embodiments enable the production of improved secondary lithium ion battery cells that can provide more current when operating at lower temperatures *(e.g.,* -20 °C and below), and can also provide good longevity throughout successive cycles when operating at higher temperatures (*e.g.*, 45 °C and above). The technical effects and technical problems in the specification are exemplary and are not limiting. It should be noted that the embodiments described in the specification may have other technical effects and can solve other technical problems.

## Claims

1. An electrolyte solution (82), comprising:
- at least one ester solvent; and
- a plurality of additives, wherein the plurality of additives comprises:
- a cyclic carbonate-based additive present in an amount between 0.5 wt% and 2.0 wt% and
- a sultone-based additive present in an amount between 0.5 wt% and 2.0 wt% and
- either a borate-based additive present in an amount between 0.5 wt% and 2.0 wt% or an imide-based additive present in an amount between 0.5 wt% and 2.0 wt%.

2. The electrolyte solution (82) of claim 1,
comprising lithium hexafluorophosphate (LiPF6) as an electrolyte salt.

3. The electrolyte solution (82) of claim 1 or 2,
wherein the at least one ester solvent comprises one or more of: methyl propionate, methyl butyrate, ethyl propionate, or ethyl butyrate.

4. The electrolyte solution (82) of one of claims 1 to 3,
comprising a solvent mixture that comprises: a cyclic carbonate, a straight-chain carbonate, and the at least one ester solvent.

5. The electrolyte solution (82) of claim 4,
wherein the cyclic carbonate comprises ethylene carbonate (EC) and wherein the straight-chain carbonate comprises ethyl methyl carbonate (EMC).

6. The electrolyte solution (82) of one of claims 1 to 4,
wherein the cyclic carbonate-based additive comprises vinylene carbonate (VC) and/or wherein the sultone-based additive comprises propane sultone (PS).

7. The electrolyte solution (82) of one of claims 4 and 5,
wherein the solvent mixture comprises approximately equal parts cyclic carbonate and straight-chain carbonate, and wherein the solvent mixture comprises approximately three times as much of the at least one ester solvent as the cyclic carbonate or the straight-chain carbonate.

8. The electrolyte solution (82) of one of claims 1 to 8,
wherein the cyclic carbonate-based additive is present as vinylene carbonate (VC) in an amount of approximately 1.0 wt%, the sultone-based additive is present as propane sultone (PS) in an amount of approximately 1.0 wt%, and the borate-based additive is present as lithium bis(oxalatoborate) (LiBOB) or lithium difluoroborate (LiDFOB) in an amount of approximately 0.5 wt%, based on the weight of the electrolyte solution (82).

9. The electrolyte solution (82) of one of claims 1 to 8,
wherein the cyclic carbonate-based additive is present as vinylene carbonate (VC) in an amount of approximately 1.0 wt%, the sultone-based additive is present as propane sultone (PS) in an amount of approximately 1.0 wt%, and the imide-based additive is present as lithium bistrifluoromethylsulfonylimide (LiTFSI) in an amount of approximately 0.3 wt%, based on the weight of the electrolyte solution.

10. The electrolyte solution (82) of one of claims 1 to 9,
wherein the plurlality of additives comprises the borate-based additive, and wherein the at least one ester solvent is methyl butyrate (MB), the cyclic carbonate-based additive is vinylene carbonate (VC), the sultone-based additive is propane sultone (PS), and the borate-based additive is lithium bis(oxalatoborate) (LiBOB) or lithium difluoroborate (LiDFOB).

11. The electrolyte solution (82) of one of claims 1 to 8,
wherein the plurality of additives comprises the imide-based additive, and wherein the at least one ester solvent is methyl butyrate (MB), the cyclic carbonate-based additive is vinylene carbonate (VC), the sultone-based additive is propane sultone (PS), and the imide-based additive is lithium bistrifluoromethylsulfonylimide (LiTFSI).

12. The electrolyte solution (82) of claims 10 or 11,
wherein the VC is present in an amount of approximately 1 wt% and the PS is present in an amount of approximately 1 wt%, based on the weight of the electrolyte solution (82).

13. The electrolyte solution (82) of one of claims 4 to 12,
wherein MB comprises approximately 60 vol% of the solvent mixture.

14. The electrolyte solution (82) of one of claims 4 to 13,
wherein the solvent mixture comprises lithium hexafluorophosphate (LiPF6) in a concentration of approximately 1.2 moles per liter (M).

15. A battery cell (70) of a battery module (22),
wherein the battery cell (70) comprises the electrolyte solution (82) of one of claims 1 to 14.

## Patentansprüche

1. Elektrolytlösung (82), welche Folgendes aufweist:
- mindestens ein Esterlösungsmittel; und
- eine Vielzahl von Zusätzen, wobei die Vielzahl von Zusätzen Folgendes aufweist:
- einen Zusatz auf zyklischer Karbonatbasis in einer Menge zwischen 0,5 Gew.-% und 2,0 Gew.-% und
- einen Zusatz auf Sultonbasis in einer Menge zwischen 0,5 Gew.-% und 2,0 Gew.-% und
- entweder einen Zusatz auf Boratbasis in einer Menge zwischen 0,5 Gew.-% und 2,0 Gew.-% oder einen Zusatz auf Imidbasis in einer Menge zwischen 0,5 Gew.-% und 2,0 Gew.-%.

2. Elektrolytlösung (82) nach Anspruch 1,
welche Lithiumhexafluorophosphat (LiPF6) als Elekrolytsalz aufweist.

3. Elektrolytlösung (82) nach Anspruch 1 oder 2,
wobei das mindestens eine Esterlösungsmittel mindestens eines der Folgenden aufweist: Methylpropionat, Methylbutyrat, Ethylpropionat, oder Ethylbutyrat.

4. Elektrolytlösung (82) nach einem der Ansprüche 1 bis 3,
welche ein Lösungsmittelgemisch aufweist, welches Folgendes aufweist: ein zyklisches Karbonat, ein Karbonat mit gerader Kette, und das mindestens eine Esterlösungsmittel.

5. Elektrolytlösung (82) nach Anspruch 4,
wobei das zyklische Karbonat Ethylenkarbonat (EC) aufweist und wobei das Karbonat mit gerader Kette Ethylmethylkarbonat (EMC) aufweist.

6. Elektrolytlösung (82) nach einem der Ansprüche 1 bis 4,
wobei der Zusatz auf zyklischer Karbonatbasis Vinylenkarbonat (VC) aufweist und/oder wobei der Zusatz auf Sultonbasis Propansulton (PS) aufweist.

7. Elektrolytlösung (82) nach einem der Ansprüche 4 und 5,
wobei das Lösunsgsmittelgemisch annähernd gleiche Teile zyklischen Karbonats und Karbonat mit gerader Kette aufweist, und wobei das Lösungsmittelgemisch annähernd dreimal so viel von dem mindestens einen Esterlösungsmittel wie zyklisches Karbonat oder Karbonat mit gerader Kette aufweist.

8. Elektrolytlösung (82) nach einem der Ansprüche 1 bis 8,
wobei der Zusatz auf zyklischer Karbonatbasis als Vinylenkarbonat (VC) in einer Menge von annähernd 1 Gew.-% vorliegt, der Zusatz auf Sultonbasis in einer Menge von annähernd 1 Gew.-% als Propansulton (PS) vorliegt, und der Zusatz auf Boratbasis als Lithiumbisoxalatoborat (LiBOB) oder Lithiumdifluoroborat (LiDFOB) in einer Menge von annähernd 0,5 Gew.-% vorliegt, ausgehend von dem Gewicht der Elektrolytlösung (82).

9. Elektrolytlösung (82) nach einem der Ansprüche 1 bis 8,
wobei der Zusatz auf zyklischer Karbonatbasis als Vinylenkarbonat (VC) in einer Menge von annähernd 1,0 Gew.-% vorliegt, der Zusatz auf Sultonbasis als Propansulton (PS) ein einer Menge von annähernd 1,0 Gew.-% vorliegt, und der Zusatz auf Imidbasis als Lithiumbistrifluoromethylsulfonylimid (LiTFSI) in einer Menge von annähernd 0,3 Gew.-% vorliegt, ausgehend von dem Gewicht der Elektrolytlösung.

10. Elektrolytlösung (82) nach einem der Ansprüche 1 bis 9,
wobei die Vielzahl von Zusätzen den Zusatz auf Boratbasis aufweist, und wobei das mindestens eine Esterlösungsmittel Methylbutyrat (MB) ist, der Zusatz auf zyklischer Karbonatbasis Vinylenkarbonat (VC) ist, der Zusatz auf Sultonbasis Propansulton (PS) ist, und der Zusatz auf Boratbasis Lithiumbisoxalatoborat (LiBOB) oder Lithiumdifluoroborat (LiDFOB) ist.

11. Elektrolytlösung (82) nach einem der Ansprüche 1 bis 8,
wobei die Vielzahl von Zusätzen den Zusatz auf Imidbasis aufweist, und wobei das mindestens eine Esterlösungsmittel Methylbutyrat (MB) ist, der Zusatz auf zyklischer Karbonatbasis Vinylenkarbonat (VC) ist, der Zusatz auf Sultonbasis Propansulton (PS) ist, und der Zusatz auf Imidbasis Lithiumbistrifluoromethylsulfonylimid (LiTFSI) ist.

12. Elektrolytlösung (82) nach Anspruch 10 oder 11,
wobei das VC in einer Menge von annähernd 1 Gew.-% vorkommt und das PS in einer Menge von annähernd 1 Gew.-% vorkommt, ausgehend von dem Gewicht der Elektrolytlösung (82).

13. Elektrolytlösung (82) nach einem der Ansprüche 4 bis 12,
wobei MB annähernd 60 Volumenprozent des Lösungsmittelgemischs aufweist.

14. Elektrolytlösung (82) nach einem der Ansprüche 4 bis 13,
wobei das Lösungsmittelgemisch Lithiumhexafluorophosphat (LiPF6) in einer Konzentration von annähernd 1,2 Mol pro Liter (M) aufweist.

15. Batteriezelle (70) eines Batteriemoduls (22),
wobei die Batteriezelle (70) die Elektrolytlösung (82) nach einem der Ansprüche 1 bis 14 aufweist.

## Revendications

1. Solution d'électrolyte (82), comprenant:
- au moins un solvant consistant en un ester; et
- une pluralité d'additifs, la pluralité d'additifs comprenant:
- un additif à base de carbonate cyclique présent en une quantité située entre 0,5 % en poids et 2,0 % en poids et
- un additif à base de sultone présent en une quantité située entre 0,5 % en poids et 2,0 % en poids et
- soit un additif à base de borate présent en une quantité située entre 0,5 % en poids et 2,0 % en poids soit un additif à base d'imide présent en une quantité située entre 0,5 % en poids et 2,0 % en poids.

2. Solution d'électrolyte (82) selon la revendication 1,
comprenant de l'hexafluorophosphate de lithium (LiPF6) en tant que sel d'électrolyte.

3. Solution d'électrolyte (82) selon la revendication 1 ou 2,
dans laquelle l'au moins un solvant consistant en un ester comprend un ou plusieurs des : propionate de méthyle, butyrate de méthyle, propionate d'éthyle ou butyrate d'éthyle.

4. Solution d'électrolyte (82) selon l'une quelconque des revendications 1 à 3, comprenant un mélange de solvants qui comprend : un carbonate cyclique, un carbonate à chaîne linéaire et l'au moins un solvant consistant en un ester.

5. Solution d'électrolyte (82) selon la revendication 4,
dans laquelle le carbonate cyclique comprend du carbonate d'éthylène (EC) et dans laquelle le carbonate à chaîne linéaire comprend du carbonate d'éthyle-méthyle (EMC).

6. Solution d'électrolyte (82) selon l'une quelconque des revendications 1 à 4,
dans laquelle l'additif à base de carbonate cyclique comprend du carbonate de vinylène (VC) et/ou dans laquelle l'additif à base de sultone comprend de la sultone de propane (PS).

7. Solution d'électrolyte (82) selon l'une quelconque des revendications 4 et 5,
dans laquelle le mélange de solvants comprend des parts approximativement égales de carbonate cyclique et de carbonate à chaîne linéaire, et dans laquelle le mélange de solvants comprend approximativement trois fois plus de l'au moins un solvant consistant en un ester que du carbonate cyclique ou du carbonate à chaîne linéaire.

8. Solution d'électrolyte (82) selon l'une quelconque des revendications 1 à 8,
dans laquelle l'additif à base de carbonate cyclique est présent sous la forme de carbonate de vinylène (VC) en une quantité approximative de 1,0 % en poids, l'additif à base de sultone est présent sous la forme de sultone de propane (PS) en une quantité approximative de 1,0 % en poids, et l'additif à base de borate est présent sous la forme de bis(oxalatoborate) de lithium (LiBOB) ou de difluoroborate de lithium (LiDFOB) en une quantité approximative de 0,5 % en poids, sur la base du poids de la solution d'électrolyte (82).

9. Solution d'électrolyte (82) selon l'une quelconque des revendications 1 à 8,
dans laquelle l'additif à base de carbonate cyclique est présent sous la forme de carbonate de vinylène (VC) en une quantité approximative de 1,0 % en poids, l'additif à base de sultone est présent sous la forme de sultone de propane (PS) en une quantité approximative de 1,0 % en poids, et l'additif à base d'imide est présent sous la forme de bistrifluorométhylsulfonylimide de lithium (LiTFSI) en une quantité approximative de 0,3 % en poids, sur la base du poids de la solution d'électrolyte.

10. Solution d'électrolyte (82) selon l'une quelconque des revendications 1 à 9,
dans laquelle la pluralité d'additifs comprend l'additif à base de borate, et dans laquelle l'au moins un solvant consistant en un ester est le butyrate de méthyle (MB), l'additif à base de carbonate cyclique est le carbonate de vinylène (VC), l'additif à base de sultone est la sultone de propane (PS), et l'additif à base de borate est le bis(oxalatoborate) de lithium (LiBOB) ou le difluoroborate de lithium (LiDFOB).

11. Solution d'électrolyte (82) selon l'une quelconque des revendications 1 à 8,
dans laquelle la pluralité d'additifs comprend l'additif à base d'imide, et dans laquelle l'au moins un solvant consistant en un ester est le butyrate de méthyle (MB), l'additif à base de carbonate cyclique est le carbonate de vinylène (VC), l'additif à base de sultone est la sultone de propane (PS), et l'additif à base d'imide est le bistrifluorométhylsulfonylimide de lithium (LiTFSI).

12. Solution d'électrolyte (82) selon les revendications 10 ou 11,
dans laquelle le VC est présent en une quantité approximative de 1 % en poids et la PS est présente en une quantité approximative de 1 % en poids, sur la base du poids de la solution d'électrolyte (82).

13. Solution d'électrolyte (82) selon l'une quelconque des revendications 4 à 12,
dans laquelle le MB représente approximativement 60 % en vol du mélange de solvants.

14. Solution d'électrolyte (82) selon l'une quelconque des revendications 4 à 13,
dans laquelle le mélange de solvants comprend de l'hexafluorophosphate de lithium (LiPF6) en une concentration approximative de 1,2 mole par litre (M).

15. Élément de batterie (70) d'un module de batteries (22),
dans lequel l'élément de batterie (70) comprend la solution d'électrolyte (82) selon l'une quelconque des revendications 1 à 14.
